# EUROPEAN PATENT APPLICATION

(11) **EP 4 683 095 A1**
(43) Date of publication of application: **21.01.2026**
(21) Application number: 25187487.1
(22) Date of filing: 04.07.2025
(51) Int. Cl.: H01M 50/528, H01M 50/531, H01M 50/533, H01M 50/536, H01M 50/54

(54) **ADAPTER SHEET, SECONDARY BATTERY, BATTERY ASSEMBLY AND ELECTRONIC DEVICE**

(30) Priority: 16.07.2024 CN 202421687997 U
(71) Applicant: AESC Japan Ltd., Yokohama-Shi, Kanagawa 220-0012 (JP)
(72) Inventor: WANG, Yunhui, Jiangyin City, Wuxi City, 214443 (JP); QU, Shasha, Jiangyin City, Wuxi City, 214443 (CN); WANG, Jin, Jiangyin City, Wuxi City, 214443 (CN); XU, Yonggang, Jiangyin City, Wuxi City, 214443 (CN)
(74) Representative: Becker, Eberhard

(57) **Abstract**

Disclosed is an adapter sheet (150), configured to electrically connect the electrode assembly (120) and the top cover (172), and including: a main body (10), including a body tab welding part (12) and a body top cover welding part (14) connected to each other; a support part (20) and a flexible part (30), wherein the support part (20) is connected to the main body (10) through the flexible part (30), and the flexible part (30) is configured to fold the support part (20) relative to the main body (10), and a tab (122) of the electrode assembly (120) is clamped between the main body (10) and the support part (20). The purpose of the present disclosure lies in providing an adapter sheet (150), a secondary battery (100), a battery assembly (1002) and an electronic device (1000) to at least improve the safety performance of the secondary battery (100).

## Description

### BACKGROUND

### Technical Field

This present disclosure relates to an adapter sheet, a secondary battery, a battery assembly and an electronic device.

### Description of Related Art

The connection between the tabs and terminals of two or more cells within the existing battery is primarily achieved through adapter sheets. The same-polarity tabs of the cells are first connected to the adapter sheets by ultrasonic welding, and then the adapter sheets are welded to the corresponding terminals through laser welding.

### SUMMARY

In view of the problems existing in the related technology, the present disclosure provides an adapter sheet, a secondary battery, a battery assembly and an electronic device in order to at least improve the safety performance of the secondary battery.

The present disclosure provides an adapter sheet, configured to electrically connect the electrode assembly and the top cover, and including: a main body, including a body tab welding part and a body top cover welding part connected to each other; a support part and a flexible part, the support part is connected to the main body through the flexible part, and the flexible part is configured to fold the support part relative to the main body, and a tab of the electrode assembly is clamped between the main body and the support part.

In some embodiments, the ratio of the thickness of the main body to the thickness of the support part is in a range of 0.2 to 5.

In some embodiments, the support part includes a support tab welding part corresponding to the body tab welding part, and a support top cover welding part corresponding to the body top cover welding part.

In some embodiments, the width of the support tab welding part is less than 2/3 of the height of the tab of the electrode assembly measured from the tab initial edge to the tab welding stamping region.

In some embodiments, the width of the body tab welding part and the width of the support tab welding part are both greater than the width of the tab welding stamping region.

In some embodiments, the main body includes two of the body tab welding parts. The body top cover welding part and the two body tab welding parts define a body notch passing through the main body. The body notch separates the two body tab welding parts. The support part includes two of the support tab welding parts. The support top cover welding part and the two support tab welding parts define a support notch passing through the support part. The support notch separates the two support tab welding parts. When the main body and the support part clamp the tab therebetween, the projections of the body notch and the support notch along the clamping direction overlap each other.

In some embodiments, the body top cover welding part and the support top cover welding part are symmetrized about the flexible part.

An embodiment of the present disclosure further provides a secondary battery, including: a battery housing, including a top cover; an electrode assembly, accommodated in the battery housing, and including a cell body and a tab protruding from the cell body; and an adapter sheet described in any one of the above embodiments. The body tab welding part is electrically connected to the tab. The body top cover welding part is electrically connected to the top cover. The body tab welding part is located between the tab and the top cover. The support part is located between the tab and the cell body.

An embodiment of the present disclosure further provides a battery assembly, including the above secondary battery.

An embodiment of the present disclosure further provides an electronic device, including the above battery assembly.

The advantageous technical effects of present disclosure lie in the following:

The embodiments of the present disclosure do not require the use of auxiliary welding tabs, thereby reducing the process steps and improving assembly efficiency. A tab of the electrode assembly is clamped between the main body and support part of the adapter sheet, which may ensure the welding strength between the tab and the adapter sheet while reducing the welding cracks of the tab, improving welding yield. Furthermore, when the electrode assembly is combined and bundled, the support part provides support for the bending part of the tab, avoiding the tab from bending downward due to stress and inserting into the interior of the electrode assembly. In this way, it is possible to improve the yield of electrode assembly and secondary battery production as well as high potential test (hi-pot) while enhancing the safety performance of the electrode assembly and secondary battery.

### BRIEF DESCRIPTION OF THE DRAWINGS

In order to explain the technical solutions in the embodiments of the present disclosure or in the related art more clearly, a simple introduction will be made below to the drawings needed in the description of the embodiments or the related art. Clearly, the drawings described below are some embodiments of the present disclosure. For those skilled in the art, other drawings may be obtained based on these drawings without creative labor.
FIG. 1 shows an electron microscope image of a battery in the related art.
FIG. 2 shows an electronic device according to embodiments of the present disclosure.
FIG. 3 to FIG. 6 show adapter sheets of different shapes according to the present disclosure.
FIG. 7 shows a side view of the adapter sheet in the embodiment shown in FIG. 6.
FIG. 8 shows the connection between the adapter sheet in the embodiment shown in FIG. 5 and the electrode assembly.
FIG. 9 shows the connection between the adapter sheet in the embodiments shown in FIG. 6 and FIG. 7 and the electrode assembly.
FIG. 10 shows a secondary battery according to embodiments of the present disclosure.

### DESCRIPTION OF THE EMBODIMENTS

For a better understanding of the spirit of the present embodiment, further explanation is provided in the following in conjunction with some preferred embodiments of the present disclosure.

The embodiments of the present disclosure will be described in detail below. Throughout the specification of the present disclosure, the same or similar components and components with the same or similar functions are represented by similar reference numerals. The embodiments related to the drawings described herein are illustrative, graphical in nature, and are provided for a basic understanding of the present disclosure. The embodiments of the present disclosure should not be interpreted as limitations of the present disclosure.

As used herein, the terms "substantially", "generally", "essentially" and "about" are used to describe and explain small variations. When used in conjunction with an event or circumstance, these terms may refer to examples where the event or circumstance occurs precisely as well as examples where the event or circumstance occurs very approximately.

In this specification, unless specifically designated or limited, relative terms such as: "central", "longitudinal", "lateral", "front", "rear", "right", "left", "internal", "external", "lower", "higher", "horizontal", "vertical", "above", "below", "upper", "lower", "top", "bottom" and their derivative terms (such as "horizontally", "downwardly", "upwardly", etc.) should be interpreted as referring to the orientation described in the discussion or shown in the drawings. These relative terms are used only for descriptive convenience and do not require the present disclosure to be constructed or operated in a specific direction.

For ease of description, "first", "second", "third", and so on may be used herein to distinguish different components of a figure or a series of figures. "First", "second", "third", and so on are not intended to describe the corresponding components.

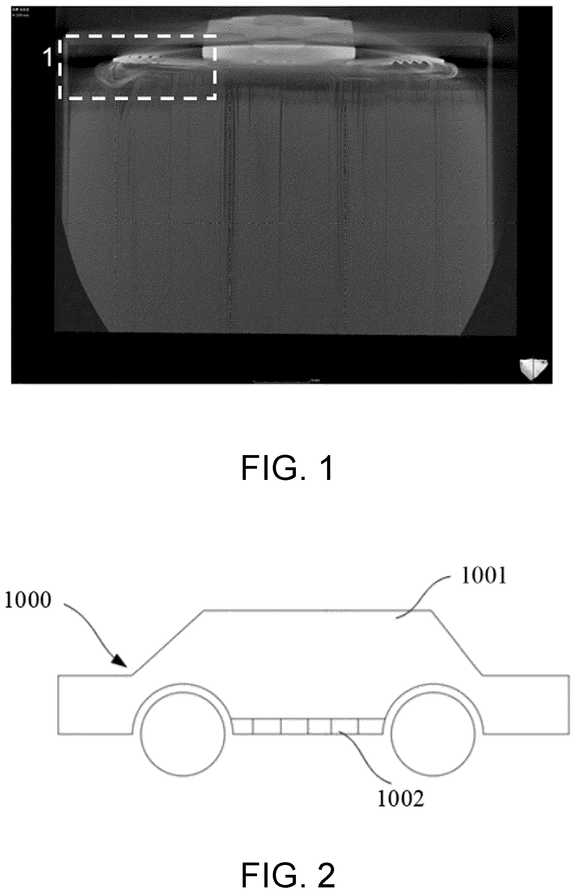

In the existing technology, auxiliary welding tabs are needed to strengthen the welding between the tab and the adapter sheet, improving welding strength. However, using auxiliary welding tabs increases process steps and reduces assembly efficiency. If the auxiliary welding tabs are eliminated and the tab is directly welded to the adapter sheet, due to the relatively thin copper foil used for the tab, under the condition where welding strength needs to be ensured, it is likely that the tab cracks during welding, otherwise a certain degree of welding strength has to be compromised to avoid welding cracks of the tab. In addition, referring to the dash-lined region 1 in FIG. 1, after the tab is welded to the adapter sheet, the cell needs to be combined and bundled, at which time the tab needs to be bent in a "C" shape. Since the tab has a certain degree of rigidity, the bending part will experience some downward bending due to stress, making it to be likely for the tab to contact the top of the electrode sheet of the cell, resulting in internal short circuit and potential safety failure risks for the battery.

The present disclosure provides an electronic device 1000, and the following embodiments are explained using a vehicle as an example of the electronic device 1000 for convenience. Referring to FIG. 2, a battery assembly 1002 is set inside the vehicle, and the battery assembly 1002 may be located at the bottom, head, or tail of the car body 1001. The battery assembly 1002 may be used for powering the vehicle, for example, the battery assembly 1002 may serve as the operating power source for the vehicle. The operating part of the electronic device 1000 is electrically connected to the battery assembly 1002 to obtain power support. The vehicle may be a gasoline vehicle, gas vehicle, or new energy vehicle, where the new energy vehicle may be a pure electric vehicle, hybrid vehicle, or range-extended vehicle, and so on, but is not limited thereto. The operating part is the car body, with the battery assembly 1002 disposed at the bottom of the car body, providing power support for the operation of the vehicle or the operation of electrical components inside the vehicle. However, in other embodiments, the electronic device 1000 may also be a mobile phone, portable device, laptop computer, ship, spacecraft, electric toy, and electric tool, etc. Spacecraft includes airplanes, rockets, space shuttles, and spaceships, and so on. The operating part may obtain power from the battery assembly 1002 and perform corresponding operation as a unit component, such as the fan blade rotation unit of a fan, the vacuum operating unit of a vacuum cleaner, etc. Electric toys include fixed or mobile electric toys, for example, game consoles, electric car toys, electric ship toys, and electric airplane toys, and so on. Electric tools include metal cutting electric tools, grinding electric tools, assembly electric tools, and railway electric tools, for example, electric drills, electric grinders, electric wrenches, electric screwdrivers, electric hammers, impact drills, concrete vibrators, and electric planers, etc. The embodiments of the present disclosure do not impose special restrictions on the above electronic device 1000.

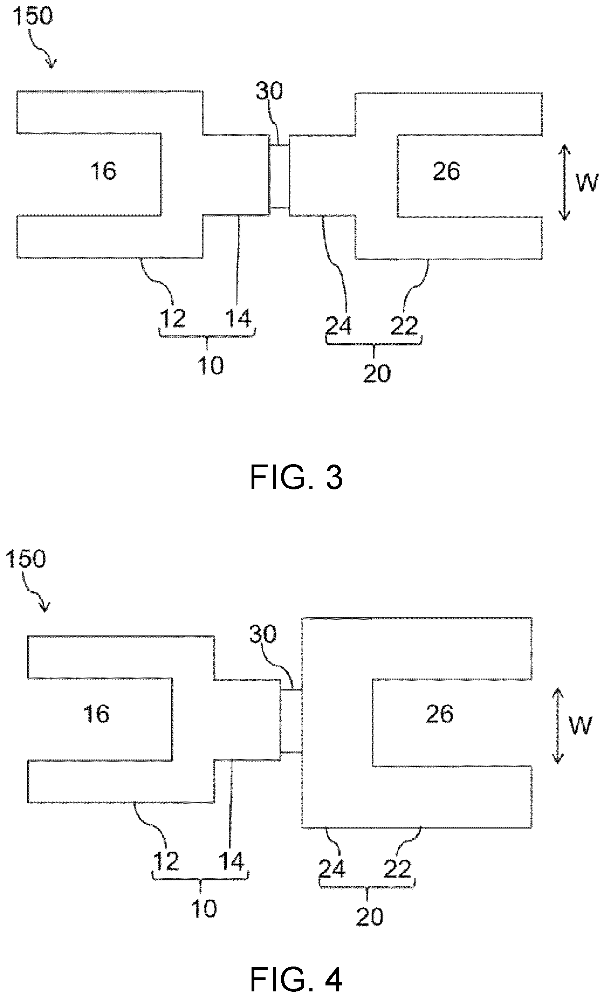

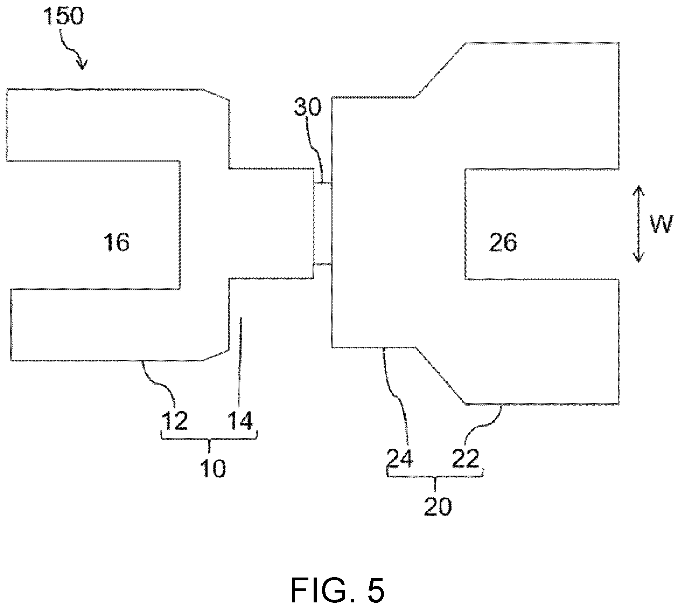

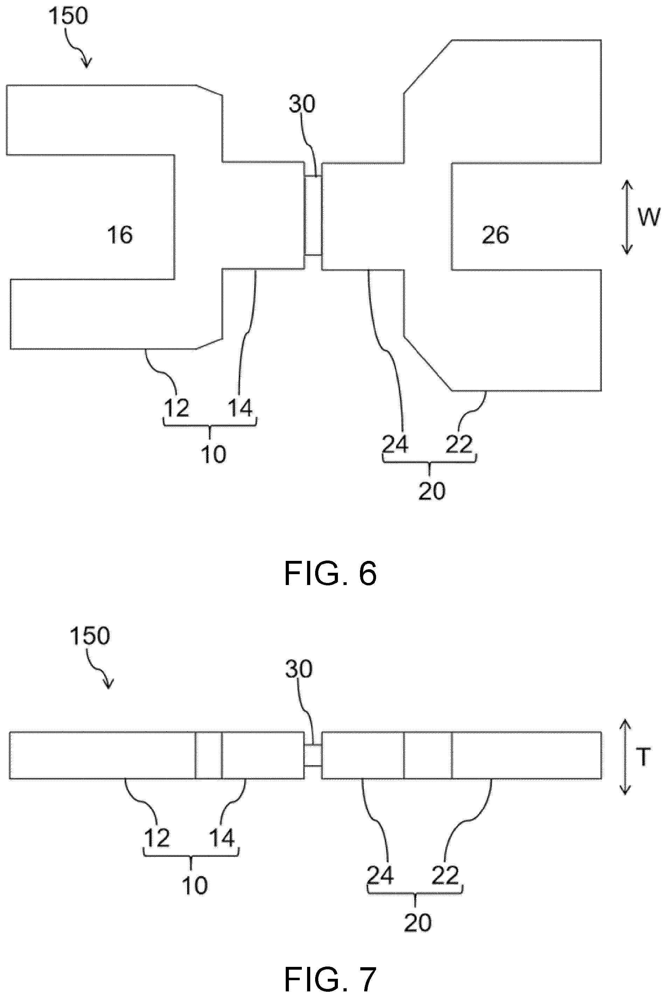

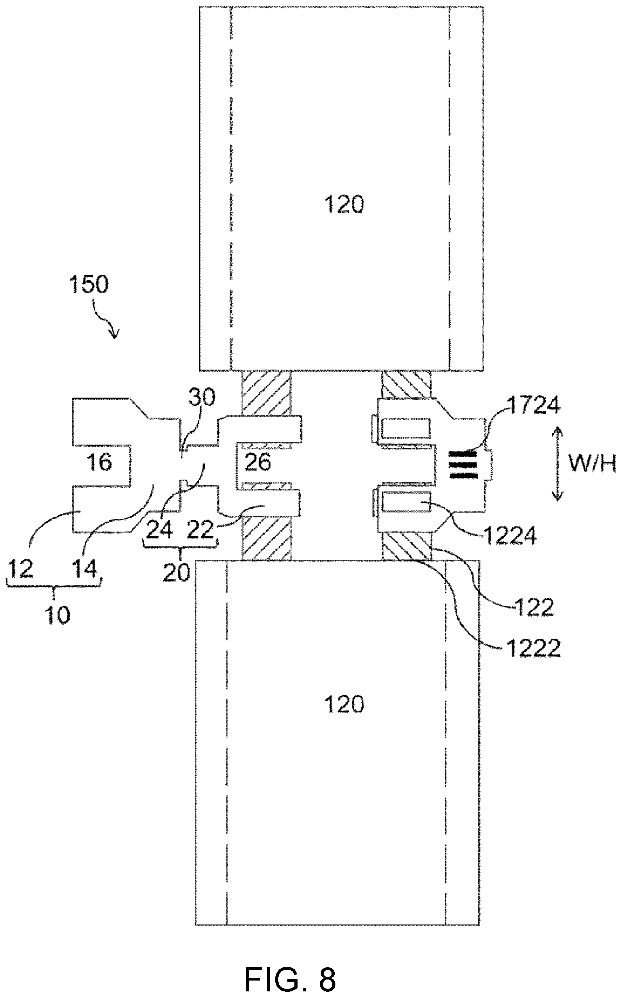

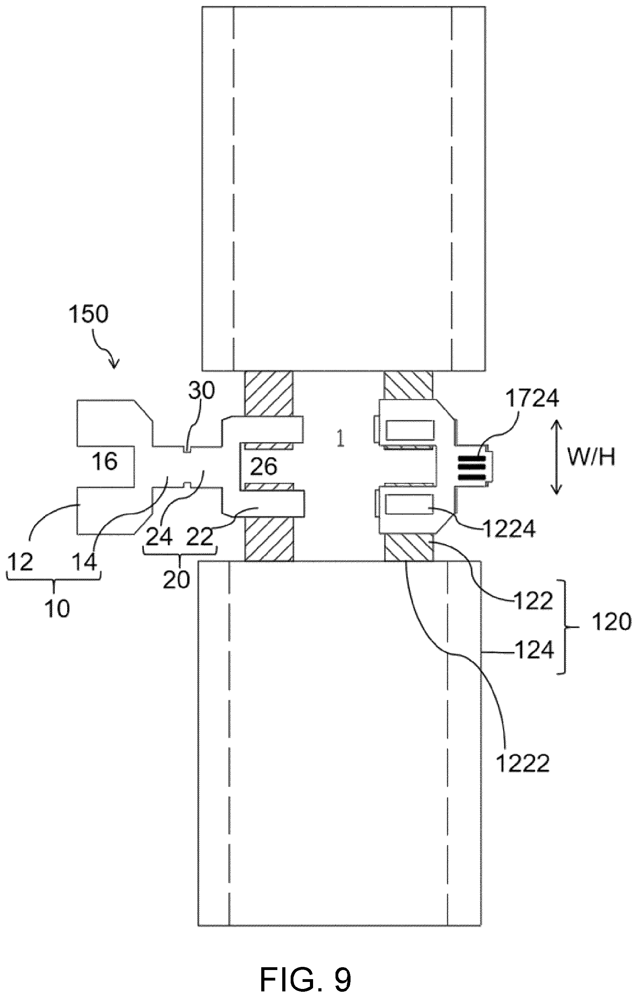

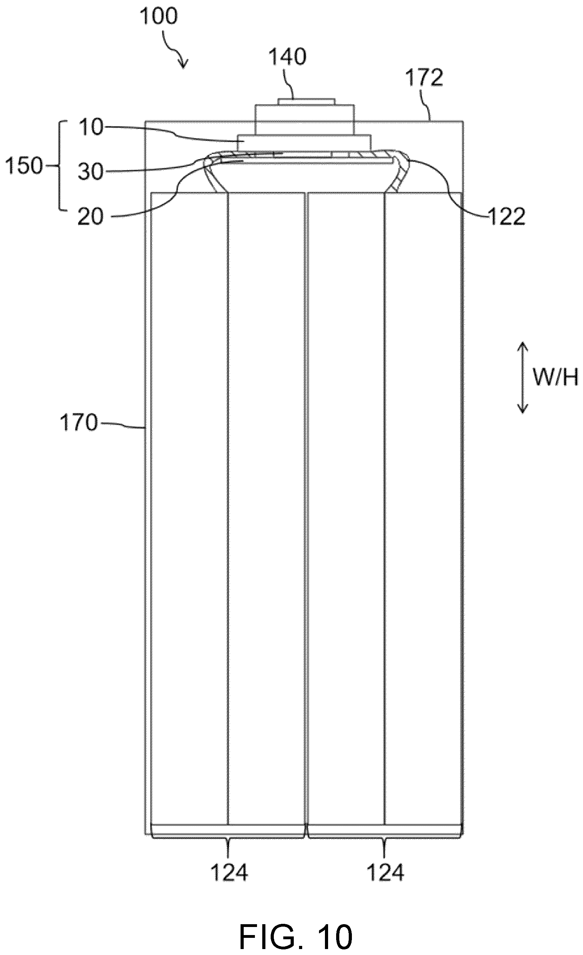

FIG. 3 to FIG. 6 show top views of adapter sheets 150 with different shapes according to the present disclosure. FIG. 7 shows a side view of the adapter sheet 150 in the embodiment shown in FIG. 6. FIG. 8 shows the adapter sheet 150 in the embodiment shown in FIG. 5 connected to the electrode assembly 120. FIG. 9 shows the adapter sheet 150 in the embodiment shown in FIG. 6 and FIG. 7 connected to the electrode assembly 120. In FIG. 8 and FIG. 9, the adapter sheet 150 on the left (showing its shape before folding) is connected to the positive tabs of two electrode assemblies 120, for example, and the adapter sheet 150 on the right (showing its shape after folding) is connected to the negative tabs of two electrode assemblies 120, for example. The two adapter sheets 150 are symmetrically arranged, with the flexible parts 30 positioned on both sides to avoid interference during folding. FIG. 10 shows a secondary battery 100 according to an embodiment of the present disclosure.

The secondary battery 100 includes a battery housing 170, an electrode assembly 120, and a terminal 140. The battery housing 170 includes a top cover 172, an end wall, and a side wall surrounding the end wall. As long as a stable sealing and electrical connection relationship can be formed, the connection between the end wall and the side wall may be achieved through various methods, for example, the connection between them may be integrally stamped, integrally cast, or separately welded. The way the side wall surrounds the end wall of is not limited, and may be in a cylindrical or prismatic manner, or may surround along any other closed-loop contour that can match with the end wall. A receiving cavity is formed inside the battery housing 170 for accommodating the electrode assembly 120, electrolyte, and other necessary battery components. Specifically, the diameter size of the battery housing 170 may be determined according to the specific dimensions of the electrode assembly 120. The material of the battery housing 170 may be various, such as copper, iron, aluminum, steel, aluminum alloy, etc. In order to prevent the battery housing 170 from rusting after long-term use, a layer of anti-rust material such as metallic nickel may also be plated on the surface of the battery housing 170.

The electrode assembly 120 is accommodated in the battery housing 170. The electrode assembly 120 is the component where electrochemical reactions occur in the secondary battery 100. The battery housing 170 may contain one or more electrode assemblies 120. The electrode assembly 120 includes stacked and/or wound positive electrode sheets, a first separator, negative electrode sheets, and a second separator. The positive electrode sheet includes a positive electrode current collector and a positive electrode active substance layer coated on the positive electrode current collector. A first coated region coated with the positive electrode active substance layer and a first uncoated region without the positive electrode active substance layer are formed on the positive electrode current collector. The first coated region and the first uncoated region are arranged along the height direction H of the electrode assembly 120. The first uncoated region extends beyond the separator towards one end in the height direction H of the secondary battery 100, forming a bent positive tab. The negative electrode sheet includes a negative electrode current collector and a negative electrode active substance layer coated on the negative electrode current collector. A second coated region coated with the negative electrode active substance layer and a second uncoated region without the negative electrode active substance layer are formed on the negative electrode current collector. The second coated region and the second uncoated region are arranged along the height direction H of the electrode assembly 120. Similarly, the second uncoated region extends beyond the separator towards one end in the height direction H of the secondary battery 100, forming a bent negative tab. The first separator and the second separator are disposed between the positive electrode sheet and the negative electrode sheet to separate the positive electrode active substance layer and the negative electrode active substance layer. Taking a lithium-ion secondary battery 100 as an example, the material of the positive electrode current collector may be aluminum. The positive electrode active substance layer includes positive electrode active substance, which may be lithium cobalt oxide, lithium iron phosphate, ternary lithium, or lithium manganese oxide, etc. The material of the negative electrode current collector may be copper. The negative electrode active substance layer includes negative electrode active substance, which may be carbon or silicon, etc. The base material of the first separator and the second separator may be PP (polypropylene) or PE (polyethylene), etc. To protect and insulate the cell, an insulating film may also be wrapped around the outside of the cell. The insulating film may be synthesized from PP, PE, PET, PVC, or other polymer materials.

Further, in the present disclosure, the positive tab and the negative tab face and are electrically connected to the top cover 172. The top cover 172 is sealed and mounted on the side wall of the battery housing 170. The shape of the outer edge of the top cover 172 corresponds to the shape of the opening of the side wall, and the configuration method of the top cover 172 includes but is not limited to mechanical sealing or welding sealing.

Referring to FIG. 3 to FIG. 7, an embodiment of the present disclosure provides an adapter sheet 150 for electrically connecting the electrode assembly 120 and the top cover 130. The adapter sheet 150 includes a main body 10, a support part 20, and a flexible part 30. The main body 10 includes a body tab welding part 12 and a body top cover welding part 14 connected to each other. The support part 20 is connected to the main body 10 through the flexible part 30, and the flexible part 30 is configured to fold the support part 20 relative to the main body 10, so that a tab 122 of the electrode assembly 120 is clamped between the main body 10 and the support part 20. The main body 10, the support part 20, and the flexible part 30 may be integrally formed, which means that the materials of the three are the same. The thickness of the flexible part 30 along the thickness direction T (refer to FIG. 7) and the width thereof along the width direction W are both less than those of the main body 10 and the support part 20, therefore the flexible part 30 is softer, and the adapter sheet 150 may be folded at this position. The embodiment of the present disclosure does not need to use auxiliary welding tabs, thereby reducing the process and improving assembly efficiency. The tab 122 of the electrode assembly 120 clamped between the main body 10 and the support part 20 of the adapter sheet 150 ensures the welding strength between the tab 122 and the adapter sheet 150 while reducing welding cracks of the tab 122, improving welding yield. Furthermore, when the electrode assembly 120 is combined and bundled, the support part 20 provides support for the bending part of the tab 122, avoiding the tab 122 from bending downward due to stress and inserting into the interior of the electrode assembly 120, thus improving the yield of the electrode assembly 120 and the secondary battery 100 production as well as high potential test (hi-pot) while improving the safety performance of the electrode assembly 120 and the secondary battery 100.

Referring to FIG. 7 and FIG. 10, along the thickness direction W, the ratio of the thickness of the main body 10 to the thickness of the support part 20 is in a range of 0.2 to 5, and the total thickness of the main body 10 and the support part 20 satisfies the maximum current carrying capability when the secondary battery 100 is working. The extreme difference between the thickness of the main body 10 and the thickness of the support part 20 is 5 times, when the ratio is within this range, the supporting capability and supporting effect for the tab 122 may be satisfied.

Referring to FIG. 3 to FIG. 7, the support part 20 also includes a support tab welding part 22 corresponding to the body tab welding part 12, and a support top cover welding part 24 corresponding to the body top cover welding part 14. During welding, the body tab welding part 12, the support tab welding part 22 and the tab 122 are welded together, and the body top cover welding part 14, the support top cover welding part 24 and the top cover 172 are welded together.

Referring to FIG. 8 and FIG. 9, the width of the support tab welding part 22 is less than 2/3 of the height of the tab 122 measured from the tab initial edge 1222 to the tab welding stamping region 1224, and the width of the body tab welding part 12 and the width of the support tab welding part 22 are both greater than the width of the tab welding stamping region 1224. When the width of the support tab welding part 22 is within this range, it is possible to satisfy the supporting effect of the tab 122 for the bending region thereof when the tab 122 is bent.

Referring to FIG. 3 to FIG. 9, the main body 10 includes two body tab welding parts 12, a body top cover welding part 14, and a body notch 16 passing through the main body 10 defined by the body top cover welding part 14 and the two body tab welding parts 12. The body notch 16 separates the two body tab welding parts 12. The support part 20 includes two support tab welding parts 22, a support top cover welding part 24, and a support notch 26 passing through the support part 20 defined by the two support tab welding parts 22. The support notch 26 separates the two support tab welding parts 22. When the main body 10 and the support part 20 clamp the tab 122 between them, the projections of the body notch 16 and the support notch 26 along the clamping direction overlap each other. It may be understood that there is an alignment deviation between the support part 20 and the main body 10 when the support part 20 is folded. Referring to FIG. 8 and FIG. 9, the widths of the body notch 16 and the support notch 26 determine the distance between the tabs 122 of the two electrode assemblies 120.

Referring to FIG. 3, FIG. 6, and FIG. 9, the body top cover welding part 14 and the support top cover welding part 24 may be symmetrized about the flexible part 30. Referring to FIG. 4, FIG. 5 and FIG. 8, the support top cover welding part 24 may be set wider than the body top cover welding part 14. Referring to FIG. 3, the main body 10 may be symmetrized with the support part 20. Referring to FIG. 4 to FIG. 9, the support part 20 is wider than the main body 10 so as to achieve a better supporting effect on the tab 122.

Referring to FIG. 10, an embodiment of the present disclosure further provides a secondary battery 100. The secondary battery 100 includes a battery housing 170, an adapter sheet 150 and an electrode assembly 120. The battery housing 170 includes a top cover 172. The electrode assembly 120 is accommodated in the battery housing 170, and includes a cell body 124 and a tab 122 protruding from the cell body 124. The body tab welding part 12 of the adapter sheet 150 is electrically connected to the tab 122. The body top cover welding part 14 is electrically connected to the top cover 172. The body tab welding part 12 is located between the tab 122 and the top cover 172. The support part 20 is located between the tab 122 and the cell body 124. The secondary battery 100 may be a lithium-ion battery, a sodium-ion battery, and an electrochemical device with the same structure and principle. The main body 10 and the support part 20 of the adapter sheet 150 clamp the tab 122 of the electrode assembly 120 between them. First, for example, an ultrasonic welding process is performed to weld the tab 122 with the body tab welding part 12 and the support tab welding part 22. After welding is completed, the electrode assembly 120 and the adapter sheet 150 are placed into the battery housing 170, and the top cover 172 is welded with the body top cover welding part 14 and the support top cover welding part 24. The tab 122 is located between the main body 10 and the support part 20, which may ensure the welding strength between the tab 122 and the adapter sheet 150 while reducing welding cracks of the tab 122, thus improving welding yield. When bundling the two (the present disclosure is not limited to this number) electrode assemblies 120 shown, the support part 20 provides support for the bending part of the tab 122 under the tab 122, avoiding the tab 122 from bending downward due to stress and inserting into the electrode assembly 120, thus improving the safety performance of the electrode assembly 120 and the secondary battery 100.

An embodiment of the present disclosure further provides a battery assembly 1002, including the secondary battery 100 described above, and the battery assembly 1002 may have the advantageous effects described above regarding the secondary battery 100.

An embodiment of the present disclosure further provides an electronic device 1000, including the battery assembly 1002 described above, and the electronic device 1000 may have the advantageous effects described above regarding the adapter sheet 150, the secondary battery 100, and the battery assembly 1002.

## Claims

1. An adapter sheet (150), configured to electrically connect an electrode assembly (120) and a top cover (172), **characterized in that** the adapter sheet (150) comprising:
a main body (10), comprising a body tab welding part (12) and a body top cover welding part (14) connected to each other;
a support part (20) and a flexible part (30), wherein the support part (20) is connected to the main body (10) through the flexible part (30), the flexible part (30) is configured to fold the support part (20) relative to the main body (10), and a tab (122) of the electrode assembly (120) is clamped between the main body (10) and the support part (20).

2. The adapter sheet (150) according to claim 1, wherein a ratio of a thickness of the main body (10) to a thickness of the support part (20) is in a range of 0.2 to 5.

3. The adapter sheet (150) according to claim 1 or 2, wherein the support part (20) comprises a support tab welding part (22) corresponding to the body tab welding part (12), and a support top cover welding part (24) corresponding to the body top cover welding part (14).

4. The adapter sheet (150) according to any one of claims 1 to3, wherein a width of the support tab welding part (22) is less than 2/3 of a height of the tab (122) of the electrode assembly (120) measured from a tab initial edge (1222) to a tab welding stamping region (1224).

5. The adapter sheet (150) according to any one of claims 1 to 4, wherein a width of the body tab welding part (12) and a width of the support tab welding part (22) are both greater than a width of the tab welding stamping region (1224).

6. The adapter sheet (150) according to any one of claims 1 to 5, wherein the main body (10) comprises two of the body tab welding parts (12), the body top cover welding part (14) and the two body tab welding parts (12) define a body notch (16) passing through the main body (10), the body notch (16) separates the two body tab welding parts (12);
the support part (20) comprises two of the support tab welding parts (22), the support top cover welding part (24) and the two support tab welding parts (22) define a support notch (26) passing through the support part (20), the support notch (26) separates the two support tab welding parts (22),
when the main body (10) and the support part (20) clamp the tab (122) of the electrode assembly (120) therebetween, projections of the body notch (16) and the support notch (26) along a clamping direction overlap each other.

7. The adapter sheet (150) according to any one of claims 1 to 6, wherein the body top cover welding part (14) and the support top cover welding part (24) are symmetrized about the flexible part (30).

8. A secondary battery (100), **characterized in that** the secondary battery (100) comprising:
a battery housing (170), comprising a top cover (172);
an electrode assembly (120), accommodated in the battery housing (170), and comprising a cell body (124) and a tab (122) protruding from the cell body (124);
the adapter sheet (150) according to any one of claims 1 to 7, wherein the body tab welding part (12) is electrically connected to the tab (122), the body top cover welding part (14) is electrically connected to the top cover (172), the body tab welding part (12) is located between the tab (122) and the top cover (172), the support part (20) is located between the tab (122) and the cell body (124).

9. A battery assembly (1002), **characterized in that** the battery assembly (1002) comprising the secondary battery (100) according to claim 8.

10. An electronic device (1000), **characterized in that** the electronic device (1000) comprising the battery assembly (1002) according to claim 9.
